# EUROPÄISCHE PATENTANMELDUNG

(11) **EP 4 070 667 A1**
(43) Veröffentlichungstag der Anmeldung: **12.10.2022**
(21) Anmeldenummer: 21167212.6
(22) Anmeldetag: 07.04.2021
(51) Int. Cl.: A23L 2/44, C12H 1/14, B01F 5/00

(54) **VERFAHREN UND VORRICHTUNG ZUR KONSERVIERUNG VON GETRÄNKEN**

(71) Anmelder: LANXESS Deutschland GmbH, 50569 Köln (DE)
(72) Erfinder: Vogl, Erasmus, 51429 Bergisch Gladbach (DE); Burgholz, Jonas, 50937 Köln (DE)
(74) Vertreter: Bittner, Bernhard

(57) **Zusammenfassung**

Vorrichtung (1) zur Konservierung von Getränken mit einer Messeinrichtung (2), welche dazu geeignet und bestimmt ist, eine Durchflussmenge einer durch eine Getränkeleitung (10) fließenden Flüssigkeit zu bestimmen und mit einer Pumpeneinrichtung (4), welche ein Konservierungsmittel und insbesondere Dialkyldicarbonate in die Getränkeleitung fördert, wobei eine Förderleitung vorgesehen ist, welche in die Getränkeleitung (10) mündet und die Pumpeneinrichtung die Diakyldicarbinate durch diese Förderleitung fördert und wobei die Pumpeneinrichtung (4) in Abhängigkeit von einer von der Messeinrichtung (2) bestimmen Durchflussmenge steuerbar ist,
dadurch gekennzeichnet, dass
die Pumpeneinrichtung (4) als Hubkolbenpumpe ausgebildet ist.

## Beschreibung

Die Erfindung betrifft ein Verfahren und eine Vorrichtung zur Konservierung von Getränken sowie die Verwendung der Vorrichtung zu diesem Zweck.

Konservierungsmittel, wie z.B. Dialkyldicarbonate, Schwefeldioxid, Natamycin, Benzoate oder Sorbate werden in der Getränkeindustrie zur Kaltentkeimung von alkoholfreien karbonisierten oder stillen Fruchtsaftgetränken, Fruchtsäften, Weinen, alkoholfreien Weinen, Ciders, Eis-Tees und anderen Getränken eingesetzt. Ein besonderes Kaltentkeimungsmittel stellen die Dialkyldicarbonate, wie insbesondere Dimethyldicarbonat oder Diethyldicarbonat, dar, die eine Reihe von Vorteilen aufweisen. Der herausragende Vorteil liegt dabei in der Tatsache begründet, dass Geschmack und Farbe, im Gegensatz zur Heißabfüllung, nicht beeinflusst werden. Auch gegenüber persistenten Konservierungsstoffen, wie Natriumbenzoat bzw. Benzoesäure oder Kaliumsorbat bzw. Sorbinsäure, besteht der Vorteil insbesondere in der Abwesenheit jeglicher geschmacklicher Beeinträchtigungen und dem Verschwinden der Wirkung. Auf Grund des Zerfalls der Dialkyldicarbonate in unbedenkliche Bestandteile wird durch den eigentlichen Verbraucher kein Konservierungsstoff bzw. Konservierungsmittel konsumiert.

Gegenüber einer kaltaseptischen Abfüllung sind besonders die ganz wesentlich geringeren Investitionskosten in Anlagentechnik als Vorteil beim Einsatz von Dialkyldicarbonaten bekannt.

Nach dem Stand der Technik werden zur Zugabe von Dialkyldicarbonate ausschließlich on-line - Membran-Dosierpumpen verwendet. Dies ist nötig, da die zu behandelnde Getränkemenge nicht von vorneherein feststeht. Ein Vorteil von Membranpumpen besteht darin, dass deren Pumpraum vollständig abgeschlossen ist.

Es wurden Geräte und Verfahren beschrieben, welche es erlauben, Dialkyldicarbonate mit relativ einfachen Vorrichtungen nach dem Prinzip von Wasserstrahlpumpen in Weinfässer einzubringen. Allerdings funktioniert dieses Verfahren nur, wenn die Getränkemenge genau bekannt ist bzw. genau der Menge in den genormten Weinfässern entspricht. Hierunter fällt die Vorrichtung, welche in der WO 2019 179 695 A1 wurde, für genau definierte Mengen Wein in Fässern. Diese arbeitet nach einem wesentlich einfacheren Prinzip, funktioniert jedoch nur mit kleineren und vor Beginn genau festgelegten Getränkemengen. Sie ist für die übliche on-line-Dosage nicht zu verwenden.

Die Apparate mit Membranpumpen bestehen aus einer magnetisch oder elektrisch angetriebenen Membranpumpe, Vorratsgefässen, einer an die Getränkeleitung angebrachten Vorrichtung zur Verdüsung des Dialkyldicarbonates, einem an die Getränkeleitung angebrachten Durchflussmessgerät, sowie einer Elektronik-Steuerung. Dosierpumpen dieser Art sind üblicherweise fest in die Getränkelinie installiert.

Die Funktionsweise dieser Geräte beruht auf der on-line - Messung der im Getränkerohr herrschenden Getränkedurchflussrate und der daraus parallel berechneten Menge an zu dosierendem Dialkyldicarbonat. Dialkyldicarbonate werden damit jeweils proportional in der benötigten Menge in das Getränkerohr zudosiert. Beispiele dieser Pumpen sind die VelcorinDT-Geräte der Firma Lanxess.

Bei der Behandlung von Getränken, beispielsweise alkoholfreien Erfrischungsgetränken oder Wein oder Biermischgetränken, kann eine kaltsterile Behandlung mit Dialkyldicarbonaten beispielsweise zur Bekämpfung von Bakterien oder Hefen nötig werden. Zur Behandlung werden deshalb die erwähnten Dosiergeräte eingesetzt.

Die oben beschriebenen Membranpumpen arbeiten zufriedenstellend, gehen jedoch mit gewissen Einschränkungen einher. So sind die eingesetzten Membran - Dosierpumpen relativ groß und schwer und müssen daher üblicherweise mit speziellen mechanischen Vorrichtungen zur Beförderung von Lasten transportiert werden. Wünschenswert wären Dosierpumpen, welche leicht von einer Person getragen werden können. Dies würde einen wesentlich einfacheren und flexibleren Einsatz erlauben.

Außerdem sind Membran-Dosierpumpen mit Metall - Membran relativ teuer. Dies liegt an der relativ soliden Ausführung, welche erforderlich ist, um eine zuverlässige Funktion zu gewährleisten. Wünschenswert wären Geräte, welche wesentlich einfacher konstruiert sind.

Zudem erfordert die Verwendung einer Membran-Dosierpumpe ausreichend Zeit für Aufbau und Installation. Beispielsweise muss sichergestellt werden, dass die Pumpen waagerecht aufgestellt sind. Wünschenswert wären hier Geräte, welche relativ unkompliziert und schnell installiert werden können, insbesondere bei der Abfüllung von Wein, wo die entsprechenden Geräte nur für kurze Zeit im Jahr verwendet werden und daher eine schnelle und unkomplizierte Installation besonders vorteilhaft wäre.

Des Weiteren können bei Membran-Dosierpumpen die Membranen brechen oder feine Risse bekommen. Dies kann dazu führen, dass Öl aus dem Öl-Druckbereich der Membran in das Getränk gelangen kann. Um Fehldosagen sicher zu verhindern, ist es bei diesen Pumpen daher nötig, aufwändige Überwachungsvorrichtungen einzubauen, um auch einen Membranbruch sicher detektieren zu können.

Alle bekannten Pumpen-Geräte zur Konservierung mit Dialkyldicarbonaten arbeiten mit einer Membran. Ein Grund dafür dürfte die bisherige Annahme sein, dass nur durch eine Membran eine sichere Verwendung von Dialkyldicarbonaten möglich ist, da diese Dialkyldicarbonate teilweise sehr reizend sind. Bei vielen anderen Pumpen, wie beispielsweise Zahnradpumpen oder Kolbenpumpen, ist üblicherweise der produktführende Bereich nicht vollkommen abgeschlossen, so dass ein minimaler Produktaustritt nicht verhindert werden kann. Tatsächlich ist bei der Verwendung einer Membran - Dosierpumpe die Trennung von Dialkyldicarbonatführenden Bereichen von der Umwelt/dem Außenbereich vergleichsweise einfach, vollständig und sicher möglich. Dies wurde bisher als Vorbedingung zur sicheren Dosage von Dialkyldicarbonaten gesehen. Daher kamen für einen Fachmann nur Membranpumpen in Frage.

Es bestand daher weiterhin Bedarf nach einem Verfahren, mit dem die Nachteile des Standes der Technik zur Dosage von Dialkyldicarbonaten, überwunden werden können.

Überraschend wurde nun ein Verfahren und eine Vorrichtung gefunden, welche gegenüber der Membran-Dosierpumpe wesentliche Vorteile bietet.

Die Vorrichtung bzw. das Verfahren ist zudem wesentlich ökonomischer als die bisher eingesetzten Verfahren zur Konservierung von Getränken.

Eine erfindungsgemäße Vorrichtung zur Konservierung von Getränken weist eine Messeinrichtung auf, welche dazu geeignet und bestimmt ist, eine Durchflussmenge einer durch eine Getränkeleitung fließenden Flüssigkeit zu bestimmen, und eine Pumpeneinrichtung, welche ein Konservierungsmittel, insbesondere Dialkyldicarbonate in die Getränkeleitung fördert und/oder eindosiert, wobei eine Förderleitung vorgesehen ist, welche in die Getränkeleitung mündet und die Pumpeneinrichtung die Dialkyldicarbonate durch diese Förderleitung fördert, und wobei die Pumpeneinrichtung in Abhängigkeit von einer von der Messeinrichtung bestimmten Durchflussmenge steuerbar ist.

Erfindungsgemäß ist die Pumpeneinrichtung als Kolbenpumpe und insbesondere als Hubkolbenpumpe ausgebildet.

Im Rahmen der Erfindung werden daher eine Vorrichtung und ein Verfahren zur Konservierung von Getränken, umfassend eine Messeinrichtung und insbesondere eine Durchflussmesseinrichtung und eine Kolbenhubpumpe beschrieben.

Die Verwendung einer Kolbenhubpumpe ist ungewöhnlich, da diese in ihrem Aufbau aufwendiger ist als eine Membranpumpe. Der wesentliche Vorteil im Einsatz einer Kolbenhubpumpe liegt jedoch in deren variablerem Einsatz, insbesondere auch hinsichtlich der Fördermengen.

Getränke im Sinne der Erfindung sind vorzugsweise alkoholfreie Erfrischungsgetränke, bzw alle diesen entsprechenden Getränke anderer Jurisdiktionen, die teilweise andere Klassifizierungen benutzen. Für die Erfindung geeignet sind auch Wein und Weinmischgetränke, alkoholhaltige Getränke von 0,5-18% Alkohol, beispielsweise Bier oder Biermischgetränke, Säfte, Nektare, Saftmischgetränke, Eistees usw.. Karbonisierte und nichtkarbonisierte Getränke sind gleichermaßen geeignet. Getränke mit einem pH - Wert größer 5 sind dabei nicht im Sinne der Erfindung bevorzugt. Bevorzugt weisen daher die abzufüllenden Getränke einen pH-Wert auf, der unter oder bei 5 liegt.

Getränke im Sinne der Erfindung enthalten bevorzugt 70 bis zu 99.9 Gew. % Wasser, bezogen auf die Gesamtmasse der Flüssigkeit.

Bevorzugt handelt es sich bei der Messeinrichtung um eine Durchflussmesseinrichtung. Dabei sind alle möglichen Arten von Durchflussmesseinrichtungen geeignet. Bevorzugt ist die Durchflussmesseinrichtung aus einer Gruppe von Durchflussmesseinrichtungen ausgewählt, welche, induktive Durchflussmesser, Massen - Durchflussmesser, mechanische Durchflussmesser oder beispielsweise auch Schallwellen-Durchflussmesser oder Oberflächen - Durchflussmesser umfasst.

Eine erfindungsgemäß verwendete Hubkolbenpumpe weist typischerweise wenigstens einen kolbenförmigen (insbesondere in einer geradlinigen Richtung) beweglichen Pumpkörper auf, welcher besonders bevorzugt durch einen elektrischen Motor angetrieben wird. Bevorzugt handelt es sich bei dem Motor um einen steuer- und insbesondere regelbaren Motor und besonders bevorzugt um einen Servomotor.

Dieser Kolben befindet sich typischerweise in einem geeigneten Gehäuse (welches insbesondere aus Edelstahl besteht) und wird wiederkehrend hin und her bewegt. Der Kolben ist typischerweise mit geeigneten Dichteinrichtungen und bevorzugt Dichtringen so abgedichtet, dass keine oder nur vernachlässigbare Mengen an geförderter Flüssigkeit entweichen können. Bevorzugt können weniger als 0,1ppm bevorzugt weniger als 0,08ppm und besonders bevorzugt weniger als 0,04ppm entweichen.

Zudem weist die Hubkolbenpumpe bevorzugt eine Spüleinrichtung auf, welche geeignet ist, Stoffe und insbesondere Konservierungsmittel, welches in Bereiche hinter den Kolben gerät, auszuspülen. Das Ausspülen kann beispielsweise mit einem Lösungsmittel oder auch mit einem Gas, beispielsweise Luft, erfolgen.

Bevorzugt weist die Pumpeneinrichtung wenigstens ein Ventil und bevorzugt wenigstens zwei Ventile und insbesondere Einweg - Ventile auf, durch welche die Pumpleistung ermöglicht wird. Dabei können diese Ventile als Rückschlagventile ausgeführt sein. Diese Ventile sind insbesondere jeweils vor und hinter einer Kammer des Kolbens positioniert und bevorzugt mit der Kammer in Strömungsverbindung bringbar. Auf diese Weise wird in an sich bekannter Weise ein Ein- und Ausströmen des zu fördernden Mediums erreicht und dadurch wird das Medium vorwärts gefördert.

Weitere Ausführungen der Kolbenpumpe im Sinne der Erfindung können auch beidseitig genutzte Kolben beinhalten, bei welchen die Vor- und Rück-Bewegung in Förderleistung umgewandelt wird. Ebenso können beispielweise Pumpen mit mehreren Kolben so verschaltet werden, dass die Förderung und der Förderdruck nicht mehr pulsförmig verlaufen sondern relativ kontinuierlich werden. Man spricht beispielsweise von binären, quarternären oder dualen Pumpen, welche alle geeignet sind im Sinne der Erfindung.

Bei einer weiteren bevorzugten Ausführungsform liefert die Pumpeneinrichtung einen gepulsten Volumenstrom. Bei einer weiteren bevorzugten Ausführungsform liefert die Pumpeneinrichtung einen kontinuierlichen oder im Wesentlichen kontinuierlichen Volumenstrom beispielsweise einen periodisch schwankenden Volumenstrom. Auch wäre ein Volumenstrom denkbar, der nicht unter 10% des maximalen Volumenstroms abfällt.

Beispiele für Kolbenpumpen im Sinne der Erfindung sind etwa Benzin-Einspritzpumpen. Weitere Beispiele im Sinne der Erfindung sind Pumpen, die aus der analytischen oder präparativen HPLC Technik stammen.

Bei einer bevorzugten Ausführungsform weist die Pumpeneinrichtung eine variable Förderleistung auf.

In einer bevorzugten Ausführungsform aller vorgenannten Pumpeneinrichtungen weist diese Pumpeneinrichtung eine Förderleistung auf, die größer ist als 0,01 l/h und bevorzugt größer als 0,02 l/h. Bevorzugt weist die Pumpeneinrichtung eine Förderleistung auf, die geringer ist als 60 l/h, bevorzugt geringer als 50 l/h, bevorzugt geringer als 40 l/h, bevorzugt geringer als 30 l/h und bevorzugt geringer als bis 20 l/h.

Bevorzugt ist die Pumpeneinrichtung in einem Leistungsbereich regelbar, bei dem das Verhältnis zwischen der geringsten Förderleistung und der höchsten Förderleistung geringer ist als 0,1, bevorzugt geringer als 0,01. Auf diese Weise können mit einem einzigen Pumpentyp unterschiedlichste Anforderungen bei der Abfüllung von Getränken erfüllt werden.

Die Pumpen können dabei zyklisch pumpen und/oder einen gepulsten Volumenstrom liefern oder aber durch Ausnutzung von Ventilschaltungen bzw. der Vor - und Rück-Bewegung des Kolbens auch relativ kontinuierlich pumpen.

Keine Pumpen im Sinne der Erfindung sind Zentrifugal-, Getriebe-, Membran-, Helix-, Flüssigjet-, Verdränger-, Schrauben- oder Schlauch-Pumpen. Die Anmelderin hat in umfangreichen Studien und Experimenten ermittelt, dass diese genannten Pumpen jeweils nicht geeignet sind, die sehr spezifischen Anforderungen, die sich durch die Verwendung des Konservierungsmittels ergeben, zu erfüllen.

Bevorzugt ist die Pumpeneinrichtung im Sinne der Erfindung eine selbstansaugende Pumpe. Dies sind Pumpen, welche beim Anlaufen nicht bereits mit dem flüssigen zu pumpenden Medium gefüllt sein müssen, leer anlaufen können und durch ihre Fähigkeit auch in trockenem Zustand eine Saugwirkung entwickeln und selbständig das Medium ansaugen. Die verwendete Pumpeneinrichtung ist daher bevorzugt zum Fördern flüssiger Substanzen geeignet und bestimmt, selbst wenn diese zeitweise nicht an der Pumpeneinrichtung anliegen.

Bei einer weiteren vorteilhaften Ausführungsform weist die Pumpeneinrichtung wenigstens teilweise Materialien auf, welche keine Zersetzung des Konservierungsmittels und insbesondere keine Zersetzung von Dimethyldicarbonat bewirken. Besonders bevorzugt weisen wenigstens diejenigen Bestandteile der Pumpeneinrichtung, welche in Kontakt mit dem Konservierungsmittel kommen, ein Material auf (oder bestehen aus einem Material), welches keine Zersetzung des Konservierungsmittels und insbesondere keine Zersetzung von Dimethyldicarbonat bewirkt.

Bei einer bevorzugten Ausführungsform handelt es sich bei dem Material um passivierten Edelstahl. Bevorzugt weisen daher wenigstens einzelne Komponenten der Pumpeneinrichtung Materialien auf (oder bestehen aus Materialien), welche keine Zersetzung des Konservierungsmittels und insbesondere keine Zersetzung von Dimethyldicarbonat bewirken. Bevorzugt sind diese Komponenten aus einer Gruppe von Komponenten der Pumpeneinrichtung ausgewählt, welche einen Kolben der Pumpeneinrichtung, einen Kolbenraum der Pumpeneinrichtung, Leitungen zum Leiten des Konservierungsmittels, Ventile der Pumpeneinrichtung, Abdichtungseinrichtungen und dergleichen umfasst.

Bei einer bevorzugten Ausführungsform handelt es sich bei den Ventilen der Pumpeneinrichtung um Kugelventile. Bei einer besonders bevorzugten Ausführungsform sind die Ventilkugeln dieser Kugelventile aus einem Material hergestellt, welches keine Zersetzung des Konservierungsmittels bewirkt, und sind bevorzugt aus Rubin oder aus passiviertem Edelstahl hergestellt.

Bei einer weiteren vorteilhaften Ausführungsform weist die Pumpeneinrichtung eine Erwärmungseinrichtung zum Erwärmen von Bestandteilen der Pumpeneinrichtung auf und insbesondere zum Erwärmen von Bestandteilen, welche mit dem Konservierungsmittel in Kontakt treten. So können beispielsweise Bestandteile, wie der Kolbenraum, der Kolben oder die Ventile oder die Leitungen, erwärmt werden.

Bei einer weiteren Ausführungsform weist die Pumpeneinrichtung wenigstens eine Temperaturerfassungseinrichtung zur Erfassung einer Temperatur des Konservierungsmittels und/oder von Bestandteilen der Pumpeneinrichtung auf. Bei einer bevorzugten Ausführungsform ist die Pumpeneinrichtung auch in Abhängigkeit von Daten oder Messwerten, welche von dieser oder der(n) Temperaturerfassungseinrichtung(en) erfasst und/oder ausgegeben werden, steuerbar.

Bei der Feststellung einer zu niedrigen Temperatur des Konservierungsmittels können dann Bereiche der Pumpeneinrichtung beheizt werden. Bei Feststellung einer zu niedrigen Temperatur ist es möglich, die Zufuhr von Konservierungsmittel in die Pumpeneinrichtung zu unterbrechen oder die Pumpeneinrichtung abzuschalten.

Bei einer weiteren vorteilhaften Ausführungsform weist die erfindungsgemäße Vorrichtung eine Düseneinrichtung auf, welche das Konservierungsmittel und insbesondere das Dialkyldicarbonat in die Getränkeleitung fördert und/oder eindosiert, wobei diese Düseneinrichtung bevorzugt eine beheizbare Düseneinrichtung ist. Es ist auch möglich, dass das abzufüllende Getränk auf einer Temperatur von wenigstens 20°C gehalten wird.

Die Pumpeneinrichtung saugt bevorzugt aus einem Vorratsgefäß das Konservierungsmittel, insbesondere das Dialkyldicarbonat, an und pumpt es zu der Düseneinrichtung. Die Düseneinrichtung bewirkt bevorzugt ein Einsprühen des Konservierungsmittels, insbesondere des Dialkyldicarbonats in das Getränk.

Bevorzugt fördert die Pumpeneinrichtung das Konservierungsmittel unter Druck zu der Düseneinrichtung, und bevorzugt unter einem Druck der zwischen 5bar und 100bar, bevorzugt zwischen 15bar und 50bar liegt.

Bevorzugt wird das Getränk durch die Getränkeleitung mit einem Durchfluss von 40l/h - 80000l/h gefördert.

Bevorzugt sind die Leitungen zur Verbindung von Vorratsbehältnis und Pumpeneinrichtung und/oder von der Pumpeneinrichtung zur Düse aus Edelstahl gefertigt, können aber auch aus einem anderen Metall oder Kunststoff bestehen.

Düsen im Sinne der Erfindung sind vorteilhaft aus Edelstahl und besonders bevorzugt aus passiviertem Edelstahl gefertigt.

Bevorzugt versprüht die Düseneinrichtung das Konservierungsmittel und insbesondere das Dialkyldicarbonat in feinster Form in das Getränk, wobei die durchschnittliche Tröpfchengröße bevorzugt <0,1 mm beträgt. Besonders bevorzugt öffnet die Düseneinrichtung auf Druck, bzw. verschliesst sich - insbesondere selbsttätig - sobald kein Konservierungsmittel bzw. Dialkyldicarbonat mehr gepumpt wird, bzw. wenn der Konservierungsmittel-/Dialkyldicarbonat-seitige Druck unter eine vorgegebene Grenze fällt, beispielsweise wenn der Druck unter 10 bar sinkt.

Besonders bevorzugt ist die Düseneinrichtung beheizt, um eine Auskristallisation der Dialkyldicarbonate zu verhindern. Die Heizung kann beispielsweise bevorzugt in Form eines elektrischen Heizkörpers ausgeführt werden, der besonders bevorzugt mit Hilfe eines sich erwärmenden Heizdrahtes gesteuert wird und welcher insbesondere in einen Metallkörper eingebettet oder direkt um die Düse gelegt wird. Bevorzugt ist die Düseneinrichtung in einem Bereich von 25°C bis 70°C, bevorzugt in einem Bereich 35°C bis 55°C beheizbar.

Die Konservierung erfolgt gegen Mikroorganismen, wie z.B. Bakterien, Hefen und Pilzen. Bevorzugt erfolgt die Konservierung gegen Mikroorganismen, welche durch Sekundär - Kontaminationen im Getränk vorhanden sind. Der Begriff Konservierung im Rahmen der Erfindung umfasst ebenfalls die Sterilisation, also den Fall, bei dem schon vor dem Zusatz der Konservierungsmittel Mikroorganismen in den Getränken enthalten sind. Die Konservierungsmittel wirken dann ebenfalls als Sterilisationsmittel.

Als Konservierungsmittel werden bevorzugt Dialkyldicarbonate eingesetzt. Ganz besonders bevorzugt wird Dimethyldicarbonat eingesetzt, noch weiter bevorzugt wird Dimethyldicarbonat mit einer Reinheit >99.8% als Konservierungsmittel eingesetzt. In einer weiteren Ausführungsform der Erfindung wird Dimethyldicarbonat eingesetzt, welches durch geeignete Verfahren stabilisiert wurde.

Derartige Verfahren, wie beispielsweise die Verwendung einer Phosphorverbindung aus der Reihe Phosphoroxide, Phosphor-Sauerstoff-Säuren und deren Derivate sind beispielsweise aus der EP 2 013 160 B1 bekannt. Die EP 2 016 041 B1 beschreibt die Verwendung von mindestens einer Protonen-Säure aus der Reihe der anorganischen Säuren und der organischen Carbonsäuren und deren Derivate, wobei es sich bei den organischen Carbonsäuren um gesättigte und ein- oder mehrfach ungesättigte aliphatische Monocarbonsäuren und gesättigte und ein- oder mehrfach ungesättigte aliphatische Di- und Polycarbonsäuren und bei deren Derivaten um Hydroxamsäuren, Hydroxycarbonsäuren, Aldehyd- und Ketosäuren handelt, zur Stabilisierung von Dialkyldicarbonaten gegen chemische und thermische Abbaureaktionen, wobei die Protonen-Säure oder deren Mischungen in einer Menge von 0.01 bis 100 000 ppm bezogen auf Dialkyldicarbonate oder deren Mischungen eingesetzt wird.

In einer weiteren Ausführungsform der Erfindung wird Dimethyldicarbonat in einer Mischung mit Phosphorverbindungen, wie vorzugsweise Phosphaten, noch weiter bevorzugt mit Trimethylphoshat oder Phosphorsäure eingesetzt. Vorzugsweise wird die Phosphorverbindung in einer Menge zwischen 0,01 ppm und 1000 ppm bezogen auf die Gesamtmenge der Mischung aus Dimethyldicarbonat und Phosphorverbindungen eingesetzt.

Vorzugsweise werden 0,1 ppm bis 250 ppm Konservierungsmittel bezogen auf das Getränke - Volumen eingesetzt. Besonders bevorzugt werden 1 ppm bis 250 ppm Konservierungsmittel bezogen auf das Volumen des Getränks eingesetzt.

Bei einer weiteren vorteilhaften Ausführungsform ist die Pumpeneinrichtung innerhalb einer Kammer bzw. innerhalb eines Gehäuses angeordnet. Bevorzugt ist dieses Gehäuse aus Edelstahl gebildet. Dabei ist es möglich, dass diese Kammer bzw. dieses Gehäuse die Pumpeneinrichtung im Wesentlichen vollständig umgibt (abgesehen von den Zuführungen und den Abführungen für das Konservierungsmittel). Bei einer weiteren bevorzugten Ausführungsform ist auch ein Vorratsbehältnis für das Konservierungsmittel innerhalb dieses Gehäuses angeordnet.

Bei einer weiteren vorteilhaften Ausführungsform weist die Vorrichtung eine Inaktivierungseinrichtung zum Behandeln und insbesondere zum Deaktivieren von Konservierungsmittel - Dämpfen und insbesondere Dialkyldicarbonat - Dämpfen auf.

Bei einer bevorzugten Ausführungsform weist diese Inaktivierungseinrichtung wenigstens eine Luftumwälzungseinrichtung und/oder wenigstens eine Filtereinrichtung und insbesondere eine Aktivkohlefiltereinrichtung auf.

Bei einer weiteren vorteilhaften Ausführungsform weist die Vorrichtung eine Erfassungseinrichtung zum Erfassen von Dämpfen und insbesondere von Konservierungsmittel - Dämpfen auf.

Bei einer weiteren vorteilhaften Ausführungsform mündet die Förderleitung in einen gekrümmten Abschnitt und/oder Umlenkabschnitt der Getränkeleitung. Dies ist bevorzugt, weil in einem derartigen gekrümmten Abschnitt die Fließrichtung des Getränks geändert wird und es so bevorzugt zu Verwirbelungen kommt, welche die Eindosierung des Konservierungsmittels begünstigen, sprich eine gute Verteilung des Konservierungsmittels im Getränk zur Folge hat.

Bei einer weiteren bevorzugten Ausführungsform weist die Vorrichtung ein Vorratsbehältnis zur Aufnahme des Konservierungsmittels und insbesondere des Dialkyldicarbonats auf. Dabei handelt es sich bei dem Vorratsbehältnis insbesondere um ein wechselbares Behältnis. Dabei kann die Vorrichtung bevorzugt eine Halterung zur Aufnahme dieses Behältnisses aufweisen.

Bevorzugt kann die Pumpeneinrichtung das Konservierungsmittel aus diesem Vorratsbehältnis abziehen. Bei einer weiteren bevorzugten Ausführungsform ist das Vorratsbehältnis unterhalb der Pumpeneinrichtung angeordnet. Bei einer weiteren vorteilhaften Ausführungsform steht das Vorratsbehältnis in Strömungsverbindung mit der Pumpeneinrichtung oder ist in eine solche Strömungsverbindung bringbar.

Bei einer weiteren vorteilhaften Ausführungsform ist die Durchflussmesseinrichtung in einer Strömungsrichtung des Getränks stromaufwärts der Position der Zuführung des Konservierungsmittels bzw. der Dialkyldicarbonate in die Getränkeleitung angeordnet. Dabei ist bevorzugt die Durchflussmesseinrichtung in einem derartigen Abstand vor (in der Strömungsrichtung des Getränks) der Position der Zuführung des Konservierungsmittels angeordnet, dass jederzeit unmittelbar auf eine sich ändernde Durchflussmenge des Getränks reagiert werden kann.

Es ist möglich, dass die Durchflussmesseinrichtung Bestandteil einer Füllanlage ist und deren Daten ausgelesen werden. Bevorzugt ist jedoch die erfindungsgemäße Vorrichtung als Stand - Alone - Vorrichtung ausgebildet und kann bevorzugt auch in bestehende Füllanlagen (insbesondere auch solche Anlagen, welche keine eigene Durchflussmesseinrichtung aufweisen) ergänzt bzw. nachgerüstet werden.

Bei einer weiteren vorteilhaften Ausführungsform weist die Vorrichtung eine Überwachungseinrichtung auf, die dazu geeignet und bestimmt ist, Leckagen der Pumpeneinrichtung zu erkennen. Dabei kann es sich beispielsweise und vorzugsweise um eine Kamera handeln, welche ein Austreten von Flüssigkeiten etwa im Bereich des Kolbenraums erfasst. Alternativ kann eine derartige Überwachungseinrichtung auch als Feuchtigkeitssensor ausgebildet sein.

Auf diese Weise kann, insbesondere im Betrieb der Vorrichtung, eine Leckage festgestellt werden. In Reaktion auf diese Feststellung kann ein Warnsignal ausgegeben werden. Auch ist es möglich, dass bei Feststellen einer derartigen Leckage die Pumpeneinrichtung abgeschaltet wird.

Die vorliegende Erfindung ist weiterhin auf ein Verfahren zur Konservierung von Getränken gerichtet, wobei mittels einer Messeinrichtung eine Durchflussmenge einer durch eine Getränkeleitung fließenden Flüssigkeit bestimmt wird und mittels einer Pumpeneinrichtung ein Konservierungsmittel, insbesondere Dialkyldicarbonate, in die Getränkeleitung gefördert wird und wobei eine Förderleitung in die Getränkeleitung mündet und die Pumpeneinrichtung das Konservierungsmittel durch diese Förderleitung fördert und wobei die Pumpeneinrichtung in Abhängigkeit von einer von der Messeinrichtung bestimmten Durchflussmenge gesteuert wird.

Erfindungsgemäß ist die Pumpeneinrichtung als Kolbenpumpe und insbesondere als Hubkolbenpumpe ausgebildet.

Bevorzugt wird das erfindungsgemäße Verfahren in der Art durchgeführt, dass die Pumpeinrichtung eingeschaltet wird, sobald der Abfüllvorgang der Getränke beginnt. Besonders bevorzugt wird eine elektronische Steuerungseinrichtung verwendet, welche aus der von der Messeinrichtung bzw. am Durchflussmesser gemessenen Getränkemenge die zu dosierende Menge an Konservierungsmittel und insbesondere Dialkyldicarbonat berechnet. Damit kann eine unabhängige und vollständig automatisierte Dosage erreicht werden.

Bei einem bevorzugten Verfahren wird das Konservierungsmittel mittels einer Düseneinrichtung in die Getränkeleitung eindosiert, wobei diese Düseneinrichtung bevorzugt beheizt wird. Besonders bevorzugt wird dabei diese Düseneinrichtung elektrisch beheizt.

Bei einem weiteren bevorzugten Verfahren öffnet und schließt die Düseneinrichtung in Abhängigkeit vom Druck des Konservierungsmittels.

Bei einem weiteren bevorzugten Verfahren wird der Öffnungszustand der Düseneinrichtung durch einen Vordruck des Konservierungsmittels in einer Förderleitung und insbesondere der oben erwähnten Förderleitung gesteuert. Dabei ist es möglich, dass das Konservierungsmittel kontinuierlich oder im Wesentlichen kontinuierlich in den Getränkestrom eingeführt und insbesondere eindosiert wird. Es ist alternativ möglich, dass das Konservierungsmittel pulsweise in den Getränkestrom eingeführt wird.

Bevorzugt weist die Pumpeneinrichtung ein Gewicht auf, welches geringer ist als 20kg, bevorzugt geringer als 15kg, bevorzugt geringer als 10kg. Bevorzugt weist die gesamte Vorrichtung ein Gewicht auf, welches geringer ist als 100kg.

Bei einem weiteren vorteilhaften Verfahren werden entstehende Konservierungsmittel - Dämpfe und insbesondere Dialkyldicarbonat- Dämpfe inaktiviert. Dies kann bevorzugt mittels einer Filtereinrichtung und/oder einer Luftumwälzeinrichtung durchgeführt werden. Dabei ist es möglich, dass ein Auftreten derartiger Dämpfe erfasst wird und entsprechend eine Luftumwälzeinrichtung aktiviert wird.

Die vorliegende Erfindung ist weiterhin auf die Verwendung einer Kolbenpumpe zum Zuführen eines Konservierungsmittels in eine Getränkeleitung bei der Abfüllung von Getränken gerichtet.

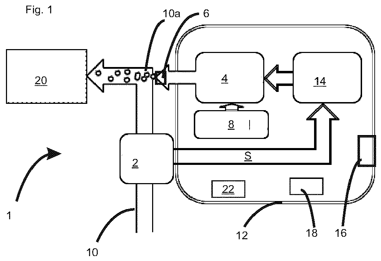

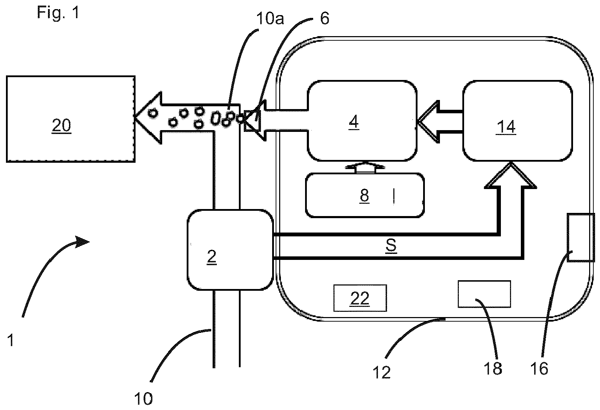

Weitere Vorteile und Ausführungsformen ergeben sich aus der beigefügten Zeichnung. Dabei zeigt
- Fig. 1: eine schematische Darstellung einer erfindungsgemäßen Vorrichtung.

Figur 1 zeigt eine erfindungsgemäße Vorrichtung 1. Dabei bezieht sich das Bezugszeichen 10 auf eine Getränkeleitung, die beispielsweise zu einer nur schematisch dargestellten Fülleinrichtung 20 führen kann. Das Bezugszeichen 2 kennzeichnet eine Durchflussmesseinrichtung, welche - insbesondere kontinuierlich - einen Durchfluss des Getränks durch die Getränkeleitung 10 erfasst. Diese Durchflussmesseinrichtung 2 gibt ein Signal S an eine Steuerungseinrichtung 14 aus, welche in Reaktion auf dieses Signal die Pumpeneinrichtung 4 steuert.

Die Pumpeneinrichtung 4 ist hier als Kolbenhubpumpe ausgeführt, welche aus einem Vorratsbehälter 8 das Konservierungsmittel absaugt und in eine Förderleitung fördert. Am Ende dieser Förderleitung ist eine Düseneinrichtung 6 angeordnet, welche das Konservierungsmittel in einen abgewinkelten Bereich 10a der Getränkeleitung 10 fördert.

Die Pumpeneinrichtung 4 ist, bevorzugt gemeinsam mit dem Vorratsbehälter 8, innerhalb eines Gehäuses 12 angeordnet. Das Bezugszeichen 18 kennzeichnet eine

Erfassungseinrichtung, welche dazu geeignet und bestimmt ist, die Anwesenheit von Konservierungsmittel - Dämpfen zu erfassen. Das Bezugszeichen 22 kennzeichnet grob schematisch eine Umwälzpumpe, welche dazu geeignet und bestimmt ist, eine Umwälzung der Luft innerhalb des Gehäuses 12 zu bewirken.

Das Bezugszeichen 16 kennzeichnet eine Deaktivierungseinrichtung, wie etwa einen Aktivkohlefilter.

Mit der erfindungsgemäßen Vorrichtung wird eine neue effiziente Vorrichtung und Methode beschrieben, mit der das Konservierungsverfahren mit Dialkyldicarbonat ökonomischer und auch in größeren Leistungsbereichen betrieben werden kann. Zudem kann die gesamte Vorrichtung wesentlich kleiner gestaltet werden als die üblicherweise verwendeten Membran - Dosierpumpen.

Bei einem ersten Beispiel des erfindungsgemäßen Verfahrens wird eine Vorrichtung gemäß Figur 1 eingesetzt. Der Vorratsbehälter 8 enthielt Dimethyldicarbonat. Als Dimethyldicarbonat wurde das Produkt Velcorin^{®} der Firma Lanxess Deutschland GmbH verwendet.

Die Pumpeneinrichtung wurde mit Edelstahl-Röhrchen an die Ein- und Auslässe der Leitungen angeschlossen. Vor der Pumpeneinrichtung wurde ein Rohr angeschlossen, welches ein Einsaugen des Dimethyldicarbonats ermöglichte.

Zur Elektroniksteuerung wurde die interne Elektronik des Durchflussmessgerätes verwendet und das erhaltene Signal direkt an die Pumpeneinrichtung 4 geleitet. Die Elektronik des Durchflussmessgeräts gibt dabei bevorzugt ein Volumen - proportionales Steuersignal ab. Mit einem 10 ml Pumpenkopf und Flussraten bis 3,5 ml/min bei einem Gegendruck von 50 - 85 bar konnte ein feines Versprühen des Dimethyldicarbonats in das Getränk (Wasser) beobachtet werden. Eine Tröpfchenbildung an der Düseneinrichtung wurde nicht beobachtet. Die Ergebnisse bestätigen eine gleichmäßige Einbringung und Durchmischung des Dimethyldicarbonats in das Getränk. Ein Austreten des reizenden Dimethyldicarbonats in die Umgebung konnte nicht beobachtet werden.

Bei einem weiteren Beispiel wurde als Düseneinrichtung eine Edelstahldüse verwendet. Diese hatte eine konische Bohrung, in welche ein konisches Gegenstück eingepasst war. Eine Steigerung des anliegenden Druckes bewirkt bei dieser Düseneinrichtung ein graduelles Öffnen. Bei Abfall des Vordruckes schließt sich die Düse wieder selbsttätig. Dieser Vordruck liegt dabei bevorzugt in einem Bereich zwischen 5 bar und 30 bar.

Als Getränk wurde Eistee verwendet. Aus dem nach 24 Stunden nach Hydrolyse entstandenen Methanol (MeOH) lässt sich die dosierte Menge an Dimethyldicarbonat zurückrechnen. Die Analyse der Getränke auf Methanol ergab eine gleichmäßige und kontrollierte Einbringung des Dimethyldicarbonats (DMDC), wie in der nachfolgenden Tabelle 1 gezeigt.

**Tabelle 1**

| | Solldosage DMDC | Gemessene Dosage DMDC (gemessen/zurückgerechnet über das Hydrolyseprodukt MeOH) | | |
|---|---|---|---|---|
| Getränkedurchflussgeschwindigkeit | | Probe 1 50 l/h | Probe 2 500 l/h | Probe 3 10000 l/h |
| Hohe Dosage | 250 ppm | 245 ppm | 245 ppm | 249 ppm |
| Niedrige Dosage | 90 ppm | 92 ppm | 90 ppm | 94 ppm |

Die Ergebnisse bestätigen eine gleichmäßige Einbringung und Durchmischung des Dimethyldicarbonats in das bzw. im Getränk. Die gewünschte Dosage wird gewährleistet. Ein Austreten des reizenden Dimethyldicarbonats in die Umgebung konnte nicht beobachtet werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in der Figur auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zur Konservierung von Getränken mit einer Messeinrichtung (2), welche dazu geeignet und bestimmt ist, eine Durchflussmenge einer durch eine Getränkeleitung (10) fließenden Flüssigkeit zu bestimmen, und mit einer Pumpeneinrichtung (4), welche ein Konservierungsmittel, insbesondere Dialkyldicarbonate, in die Getränkeleitung (10) fördert, wobei eine Förderleitung vorgesehen ist, welche in die Getränkeleitung (10) mündet und die Pumpeneinrichtung (4) das Konservierungsmittel durch diese Förderleitung fördert und wobei die Pumpeneinrichtung (4) in Abhängigkeit von einer von der Messeinrichtung (2) bestimmten Durchflussmenge steuerbar ist,
**dadurch gekennzeichnet, dass**
die Pumpeneinrichtung (4) als Hubkolbenpumpe ausgebildet ist.

2. Vorrichtung (1) nach Anspruch 1,
**dadurch gekennzeichnet, dass**
die Vorrichtung (1) eine Düseneinrichtung (6) aufweist, welche das Konservierungsmittel in die Getränkeleitung (10) fördert, wobei diese Düseneinrichtung (6) bevorzugt eine beheizbare Düseneinrichtung ist.

3. Vorrichtung (1) nach dem vorangegangenen Anspruch,
**dadurch gekennzeichnet, dass**
die Düseneinrichtung (6) einen durch einen Vordruck des Konservierungsmittels steuerbaren Öffnungsmechanismus aufweist.

4. Vorrichtung (1) nach wenigstens einem der vorangegangenen Ansprüche,
**dadurch gekennzeichnet, dass**
die Pumpeneinrichtung (4) innerhalb einer Kammer (12) angeordnet ist.

5. Vorrichtung (1) nach wenigstens einem der vorangegangenen Ansprüche,
**dadurch gekennzeichnet, dass**
die Vorrichtung eine Inaktivierungseinrichtung (16) zum Behandeln von Konservierungsmittel - Dämpfen und insbesondere von Dialkyldicarbonat - Dämpfen aufweist, wobei diese Inaktivierungseinrichtung (16) bevorzugt wenigstens eine Luftumwälzungseinrichtung und/oder eine Filtereinrichtung aufweist.

6. Vorrichtung (1) nach wenigstens einem der vorangegangenen Ansprüche,
**dadurch gekennzeichnet, dass**
die Förderleitung in einen gekrümmten Abschnitt (10a) der Getränkeleitung (10) mündet.

7. Vorrichtung (1) nach wenigstens einem der vorangegangenen Ansprüche,
**dadurch gekennzeichnet, dass**
die Vorrichtung (1) ein Vorratsbehältnis zur Aufnahme der Dialkyldicarbonate aufweist.

8. Vorrichtung (1) nach wenigstens einem der vorangegangenen Ansprüche,
**dadurch gekennzeichnet, dass**
die Messeinrichtung in einer Strömungsrichtung des Getränks stromaufwärts der Position der Zuführung der Dialkyldicarbonate in die Getränkeleitung angeordnet ist.

9. Vorrichtung (1) nach wenigstens einem der vorangegangenen Ansprüche,
**dadurch gekennzeichnet, dass**
die Pumpeneinrichtung (4) eine variable Förderleistung aufweist.

10. Vorrichtung (1) nach wenigstens einem der vorangegangenen Ansprüche,
**dadurch gekennzeichnet, dass**
die Vorrichtung (1) eine Überwachungseinrichtung aufweist, die dazu geeignet und bestimmt ist, Leckagen der Pumpeneinrichtung (4) zu erkennen.

11. Verfahren zur Konservierung von Getränken, wobei mittels einer Messeinrichtung (2) eine Durchflussmenge einer durch eine Getränkeleitung (10) fließenden Flüssigkeit bestimmt wird und mittels einer Pumpeneinrichtung (4) ein Konservierungsmittel, insbesondere Dialkyldicarbonate, in die Getränkeleitung gefördert wird, wobei eine Förderleitung in die Getränkeleitung (10) mündet und die Pumpeneinrichtung die Konservierungsmittel durch diese Getränkeleitung fördert und wobei die Pumpeneinrichtung (4) in Abhängigkeit von einer von der Messeinrichtung (2) bestimmen Durchflussmenge gesteuert wird, **dadurch gekennzeichnet, dass**
die Pumpeneinrichtung (4) als Hubkolbenpumpe ausgebildet ist.

12. Verfahren nach Anspruch 11,
**dadurch gekennzeichnet, dass**
das Konservierungsmittel mittels einer Düseneinrichtung (6) in die Getränkeleitung (10) eindosiert wird, wobei diese Düseneinrichtung (6) bevorzugt beheizt wird.

13. Verfahren nach dem vorangegangenen Anspruch,
**dadurch gekennzeichnet, dass** ein Öffnungszustand der Düseneinrichtung (6) durch einen Vordruck des Konservierungsmittels in der Förderleitung gesteuert wird.

14. Verfahren nach wenigstens einem der Ansprüche 11-13,
**dadurch gekennzeichnet, dass**
entstehende Konservierungsmittel - Dämpfe und insbesondere Dialkyldicarbonat - Dämpfe inaktiviert werden.

15. Verwendung einer Kolbenpumpe zum Zuführen eines Konservierungsmittels in eine Getränkeleitung bei der Abfüllung von Getränken.
